# EUROPEAN PATENT SPECIFICATION

(11) **EP 3 245 020 B1**
(45) Date of publication and mention of the grant of the patent: **03.03.2021**
(21) Application number: 15901176.6
(22) Date of filing: 16.10.2015
(51) Int. Cl.: B23D 47/00

(54) **METHOD AND ARRANGEMENT FOR PROCESSING CARBON BODIES**
VERFAHREN UND ANORDNUNG ZUR VERARBEITUNG VON KOHLENSTOFFKÖRPERN
PROCÉDÉ ET AGENCEMENT POUR TRAITER DES CORPS EN CARBONE

(30) Priority: 29.10.2014 NO 20141289
(43) Date of publication of application: 22.11.2017
(73) Proprietor: Norsk Hydro ASA, 0240 Oslo (NO); Lyng Drilling AS, N-7125 Vanvikan (NO)
(72) Inventor: SEEHUUS, Hans, 7224 Melhus (NO)
(74) Representative: Berg, André
(86) International application number: PCT/NO2015/000025
(87) International publication number: WO 2016/068718

(56) References cited:
- WO-A1-2006/019304
- WO-A1-2015/089672
- JP-A- H05 111 820
- SU-A1- 1 186 504
- SU-A1- 1 255 312
- SU-A1- 1 502 235
- US-A- 5 159 866
- US-A1- 2012 042 756

## Description

The present invention relates to a method and an arrangement for processing carbon bodies. In particular, the present invention concerns the processing of grooves or slots in calcinated carbon bodies.

In aluminium electrolysis using the so-called Hall-Heroult method with prebaked anodes, gas bubbles are created at the wearing (or consumable) surfaces of the anodes (mainly underneath them).

The presence of a gas layer means that the electrical resistance towards the bath increases, resulting in reduced current efficiency. In accordance with the prior art, solutions are proposed that involve ducts or grooves being created in the wearing surfaces of the anodes in order to drain the gas away, conduct it out of the bath and collect it in a degassing system. The prior art also proposes creating longitudinal grooves in the cathode carbon in order to be able to incorporate electrically conductive cathode rods.

Grooves in carbon bodies can be formed or preformed when the bodies are in a green state, i.e. before calcination or baking. One disadvantage of this is that the geometry of the grooves may be changed during handling and baking on account of creep or external mechanical stress. Such preforming may result in density gradients in the anode and rejects in the process. It may therefore be necessary to process (calibrate) the grooves so that they have the correct geometry.

The prior art also proposes a method and a device for processing slots in calcinated carbon bodies using a rotating processing tool, see the Applicants own publication WO2006/019304A1. This document discloses a method and an arrangement as per the preamble of claims 1 and 6 respectively. The tool has cutting edges that can be made out of polycrystalline diamond (PCD).

Even though the rotating processing tool as disclosed in WO2006/019304A1 has shown to be very stable and wear-resistant, the tool has some limitations with regard to processing depth, in particular when processing narrow slots. In the publication it is mentioned processing slots in a vertical plane in anodes having a width of approximately 1 cm or more. Further, the slots can be deep enough to be present throughout the life of the anode, and a processing depth of approximately 35 cm is mentioned.

US 4,136,590 A discloses a saw guide for use between a pair of circular saw blades fixed on an arbor which has a holder having an annular head in which the guide pad have parallel opposed guide faces and being loose axially movable and tiltable, and further being stabilized in an aligned position relative to the saw blades by means of a pair of spaced apart lip seals mounted on the guide pad and bearing against the annular head, the pressure of the annular seals being increased by delivery of air between the lip seals, said air also passing through passages ported out of the faces of the guide pad. This saw guide assembly uses air as the primary fluid to establish a continuous and stable fluid film between the saw guiding surface and the rotating saw blade.

SU 1502235 discloses a circular cutter blade mounted on a milling spindle where the cutter blade is driven by a driving roller that lays onto one side of the cutter blade and where a pinch roller supports the blade at the opposite side of the blade.

One problem with the processing of calcinated carbon electrodes is that the use of liquid for cooling/lubricating the tool during processing must be avoided, as moisture in the electrodes may result in major disadvantages for electrolysis. Moreover, calcinated carbon material is relatively porous so that, if liquid is used, the electrodes must undergo a comprehensive cleaning/drying process. These disadvantages mean that it is desirable to carry out the processing without the presence of cutting/cooling liquid, which increases the load on the processing tool. In theory, it would be conceivable to process the carbon bodies immediately after they have been calcinated in a furnace so that the residual heat is used to dry any liquid applied to the bodies. However, such a processing process might also produce increased thermal load on the tool and the carbon bodies.

Still further, there is a trend among aluminium producers towards application of larger anodes, both in footprint and height, in the electrolysis process. There is also an increasing focus on producing anodes with both smaller and deeper slots. Processing depths exceeding 35 cm have been requested and in the future it is expected to be 45 cm or even more.

The limitations of the prior art equipment with regard to this trend is primarily in the processing tool itself. In processing slots significant narrower than 10 mm, for instance less than 8 mm, the annular disc that forms the main structural part of the tool may become unstable and come into vibrations or get a wave-like shape due to a flexion caused by the forces transmitted between its central, driven part and the milling by the cutters at its periphery.

The present invention represents a method as defined by the features of claim 1 and an arrangement as defined by the features of claim 6 that allow effective, precise processing of deep, narrrow slots in calcinated carbon bodies, while being very durable and maintenance friendly.

The above and other advantages can be achieved with the invention as it is defined in the attached claims.

The present invention will be described in further detail in the following using figures and examples, where:
- Fig. 1: shows in a first embodiment an arrangement for processing calcined carbon bodies in accordance with the present invention, seen from one side,
- Fig. 2: shows the same as in Fig. 1, seen at the right end,
- Fig. 3: shows in a second embodiment an arrangement for processing calcined carbon bodies in accordance with the present invention, seen from one side,
- Fig. 4: shows the same as in Fig. 3 seen from above, the calcined carbon body removed,
- Fig. 5: shows the same as in Fig. 3, seen at the right end.

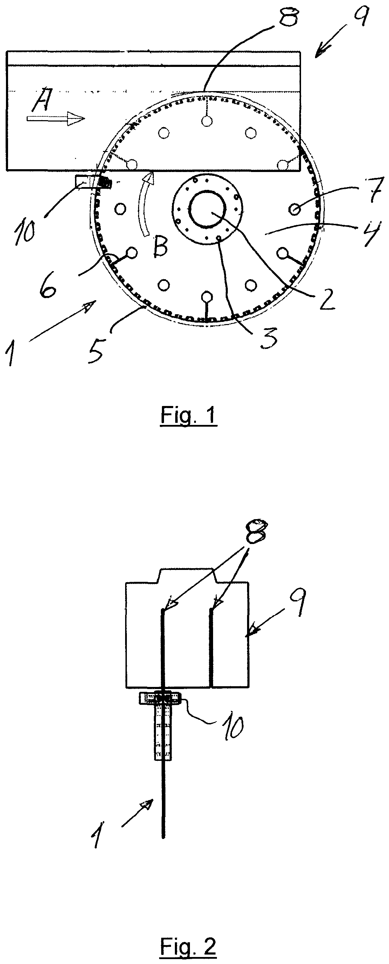

Figure 1 shows in a first embodiment a processing tool 1 in the form of a circular disc with a boss 2 for mounting on a spindle in a machining unit or processing machine. The mounting holes 3 allow the processing tool to interact with bolts or projections on a flange on the spindle (not shown). The processing machine may be of a prior art type that allows the processing tool to rotate by a driven spindle and to move linearly along a path corresponding to the extent and depth of the slot to be created. The machine may have additional equipment for handling and fixing the body to be processed (not shown). Such machines are available in a wide range of embodiments with which one skilled person is familiar and will not, therefore, be described in further detail here. As an alternative, the spindle may be stationary, while the body to be processed is moved in relation to it.

The processing tool 1 also has a central annular part 4, which extends from the boss to an outer peripheral part 5. Both the central annular part 4 and the outer peripheral part 5 may comprise slits 6 or holes 7 for better stability, among other things in relation to thermal stress. In particular, the outer peripheral part 5 is provided with slits 6 that ensure that thermal expansion in this area does not affect the flatness of the processing tool. Moreover, the slits will ensure a certain degree of springing or dampening of impacts that may occur in a tangential direction to the blade during the processing process. As the Figure also shows, the processing tool is enmeshed with a slot 8 in an anode 9. As indicated by arrow A, the anode is moved from the left to the right, while the processing tool rotates clockwise as indicated by arrow B. Thus in this embodiment the processing is done according to the climb milling principle where in general the tool and the work-piece move in the same direction.

The processing tool is provided with a guiding element 10 in the area where it enters the calcined anode. The guiding element in this embodiment consists of two jets that allow air to be blown at both sides of the processing tool in this area. Some more details of this arrangement is shown in Figure 2 where one anode 9 has two slots 8. For convenience, only one processing tool 1 is shown with the guiding element 10.

One other embodiment of the guiding element is to apply a circular disc at each side of the processing tool (not shown). These discs are perforated with a number of holes through which pressurized air is blown. The clearance between the tool and the discs are normally very narrow. If the planar processing tool is exposed to forces that brings it into a non-planar shape, for instance a wave-shape or out of transversal alignment in one way or the other, then the clearance between the tool and the disc at the 'reaction side' will be reduced or become zero and the air pressure between the tool and the disc will increase, enforcing the tool to be maintained within accepted limits with regard to misalignment in the transversal direction. This type of guiding elements will also contribute to a certain cooling of the processing tool, due to the pressurized air applied

In one other embodiment the guiding element can have an elongated shape instead of a circular one. For instance, it can be 'C'-shaped and follow the curvature of the periphery of the tool, while being arranged in a certain radial distance from the periphery.

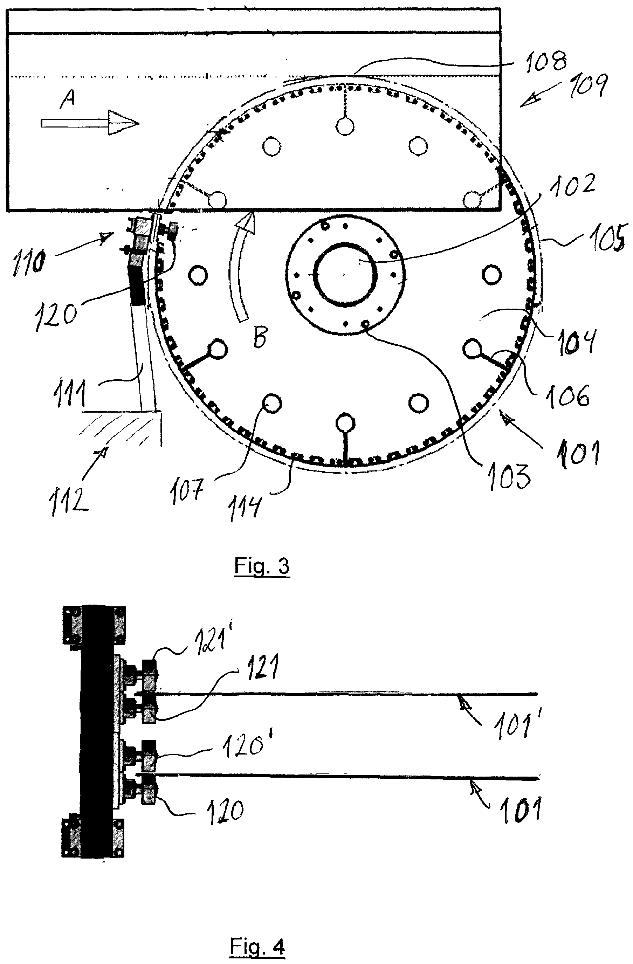

Figure 3 shows one second embodiment of the invention where a processing tool 101 in the form of a circular disc has a boss 102 for mounting on a spindle in a machining unit or processing machine. The mounting holes 103 allow the processing tool to interact with bolts or projections on a flange on the spindle (not shown).

The processing tool 101 also has a central annular part 104, which extends from the boss 102 to an outer peripheral part 105. As in the previous embodiment, both the central annular part 104 and the outer peripheral part 105 may comprise slits 106 or holes 107 for better stability, among other things in relation to thermal stress. In particular, the outer peripheral part 105 is provided with slits 106 that ensure that thermal expansion in this area does not affect the flatness of the processing tool. Moreover, the slits will ensure a certain degree of springing or dampening of impacts that may occur in a tangential direction to the blade during the processing process. A cutting edge is indicated at 114. As in the foregoing example, the processing tool is enmeshed with a slot 108 in an anode 109. As indicated by arrow A, the anode is moved from the left to the right, while the processing tool rotates clockwise as indicated by arrow B. Thus in this embodiment the processing is also done according to the climb milling principle where the tool and the work-piece move in the same direction.

The processing tool 101 is provided with a guiding element 110 in the area where it enters the calcined anode. The guiding element consists in principle of two guiding rollers (only one shown) that are arranged in close vicinity at each side of the processing tool in this area. These rollers will support the stability and transverse alignment of the processing tool in situations such as excessive wear of the cutters, faulty support of the spindle, faults in the equipment moving the body to be processed, high temperature in the processing tool, etc. In one embodiment, the guiding rollers can lay onto the sides of the processing tool, possibly with a spring action (not shown) The guiding rollers 120 are supported by a stand 111 secured at a base 112.

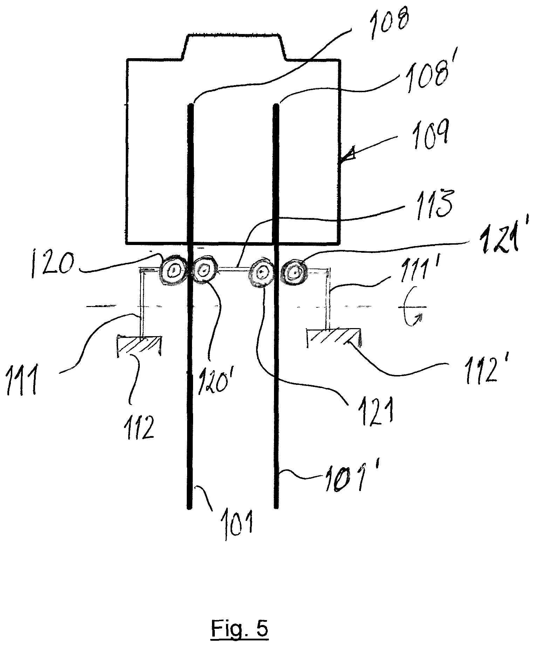

Some more details regarding the guiding rollers, are shown in Fig 4, where two sets of guiding rollers 120, 120'; 121, 121' are seen from above, the calcined anode 108 being removed. Likewise, two processing tools 101, 101' are shown. The guiding rollers are supported by stands 111, 111' onto respective bases 112, 112', see also Fig. 5. The stands 111, 111' are interconnected via a traverse beam 113.

In Figure 5 there is shown the same arrangement as in Fig. 3, seen at the right end, where the anode 109 has two slots 108, 108' formed by two processing tools 101, 101'. At a level beneath the anode 109 there is arranged the guiding rollers 120, 120'; 121, 121'.

While the guiding elements as roller in this embodiment are arranged close to the sector where the processing tool enters the anode and the milling is initiated, according to the climb milling principle, guiding elements can also be arranged at the opposite side of the processing tool, i.e. at the same horizontal level as the ones shown. This can be favourable if for one reason the rotation of the processing tool is opposite the movement of the anode, but can also serve to give additional stability to the processing tool.

It should be understood that the processing tool can be of the same type as described in WO2006/019304A1 with cutting edges or cutters of polycrystalline diamond (PCD). However, it can be made with substantially larger diameter and with much less width, due to the present arrangement. In that case the fixation of the cutters can be done in a way that needs less space sideways.

Other ceramics, composites or alloys with corresponding durability and suitability for processing calcinated carbon material may also be used.

The cutting edges may be mounted in the cutting edge holder by means of various techniques based on gluing, braze welding, soldering, mechanical attachment, etc. The cutting edge can be mounted so that its cutting surface is at a 10° angle to the radius of the processing tool or a perpendicular to the periphery at this point. Other angles may also be used. It is expedient for the angle to be in the order of 5-15°.

Tests and experiments carried out show that good cutting of chips and low wear on the tool can be achieved when the speed of the cutting edges relative to the carbon body to be processed is in the range 100 - 300 metres per minute (m/min.). The particularly preferred speed is in the order of 200 m/min.

The speed of the cutting edges will partly depend on the composition and degree of calcination of the carbon body being cut. The size of particles and the content of anthracite, coke, pitch, binder, etc. in the formula may also be significant to the determination of the optimal cutting speed. Moreover, the static forces acting on the processing tool relative to the carbon body, plus the size and form of the cut chips, will also influence how the optimal cutting speed is to be determined.

Moreover, several parallel slots may be arranged simultaneously in the carbon body by two or more processing tools being used to process the body simultaneously, as briefly shown in Fig. 5, for example by being arranged on the same rotating shaft at a certain axial distance from each other.

The machining unit may be enclosed to protect the environment against noise and dust, and it may comprise an extraction system.

Forms of processing of carbon bodies other than the creation of slots may also be carried out, but are not according to the present invention. For example, the tool may be used for the calibration of or removal of burrs from the outer geometry of carbon bodies. In such case, the tool may be arranged so that it can be moved in all three axial directions, i.e. along a linear path, downwards and sideways.

Moreover, it may be relevant to create dovetail-shaped or undercut slots with the processing tool. The tool must then be permitted to rotate and move around an axis that is inclined or skew- oriented to the carbon body to be processed.

It should be understood that the processing of the carbon body may be limited by the torque needed for the specific processing task. In case deeper and possibly smaller slots shall be produced, it may be necessary to do the slotting process in two or more steps.

## Claims

1. A method for processing calcinated carbon bodies for anodes or cathodes for use in connection with electrolytic production of aluminium, in which the carbon bodies are processed by means of a rotating processing tool (1) mounted on a driven spindle, the processing tool (1) comprises a disk with cutting edges (12) at its outer periphery that are made out of a material with durability and suitability for processing calcinated carbon material, where said processing tool is used for making slot(-s) in said carbon bodies,
character i sed in that
the slots are processed deeper than 35 cm and narrower than 8 mm, and during processing, transversal misalignment of the processing tool (1) is restricted by a guiding element (10, 110) being able to sustain reaction forces against both sides of the processing tool (1), wherein the guiding element (10, 110) is arranged close to the sector where the processing tool (1) enters the carbon body and that the processing is done according to the climb milling principle.

2. A method in accordance with claim 1,
**characterised in that**
the reaction forces increase with increased misalignment of the processing tool (1).

3. A method in accordance with claim 1,
**characterised in that**
the guiding element (10) blows pressurized air onto each side of the processing tool (1) via perforated discs or jets.

4. A method in accordance with claim 1,
**characterised in that**
the guiding element (110) aligns the processing tool (1) by means of rollers (120, 120') arranged at each side of the processing tool (1).

5. A method in accordance with claim 1,
**characterised in that**
the cutting edges (12, 114) are moved at a speed greater than 100 m/min. and less than 300 m/min. relative to the carbon body.

6. An arrangement for processing calcinated carbon bodies for anodes or cathodes for use in connection with the electrolytic production of aluminium, whereby the carbon bodies are processed by means of a rotating processing tool (1) mounted on a driven spindle, the processing tool consists of a mainly circular disc with cutting edges (12, 12') mounted at its periphery, where said cutting edges are made out of a material with durability and suitability for processing calcinated carbon material and further arranged for processing slot(-s) in said carbon bodies,
**characterised in that**
the processing tool has a diameter and width that allows processing of slot(s) deeper than 35 cm and narrower than 8 mm in the calcined carbon bodies; the arrangement further comprises a guiding element (10, 110) that guides each side of the processing tool (1) against transversal misalignment, the guiding element (10, 110) is arranged close to the sector where the processing tool enters the carbon body, where the processing is done according to the climb milling principle.

7. An arrangement in accordance with claim 6,
**characterised in that**
the guiding element (10) comprises perforated discs or jets that blows pressurized air onto each side of the processing tool (1).

8. An arrangement in accordance with claim 6,
**characterised in that**
the guiding element (110) comprises rollers (120, 120').

9. An arrangement in accordance with claim 6,
**characterised in that**
the cutting edges of the processing tool (12, 12') are mounted in cutting edge holders (7, 7').

10. An arrangement in accordance with claim 9,
**characterised in that**
the cutting edge holders (7, 7') are mounted alternately on each side of the disc.

11. An arrangement in accordance with claim 6,
**characterised in that**
the cutting edges (12, 12') are made of polycrystalline diamond (PCD).

12. An arrangement in accordance with claim 6,
**characterised in that**
the cutting surface of the cutting edges is at an angle in the order of 5-15° to the radius of the processing tool.

13. An arrangement in accordance with claim 6,
**characterised in that**
two or more processing tools are mounted axially displaced on the same shaft for simultaneous creation of two or more slots.

## Patentansprüche

1. Verfahren zum Verarbeiten von calcinierten Kohlenstoffkörpern für Anoden oder Kathoden zur Verwendung in Verbindung mit der elektrolytischen Herstellung von Aluminium, wobei die Kohlenstoffkörper durch ein rotierendes Verarbeitungswerkzeug (1), das auf einer angetriebenen Spindel montiert ist, verarbeitet werden, wobei das Verarbeitungswerkzeug (1) eine Scheibe mit Schneidekanten (12) an ihrer äußeren Peripherie umfasst, die aus einem Material mit Dauerhaftigkeit und Eignung zum Verarbeiten von calciniertem Kohlenstoffmaterial hergestellt sind, wobei das Verarbeitungswerkzeug zum Herstellen von Schlitz(en) in den Kohlenstoffkörpern verwendet wird,
**dadurch gekennzeichnet, dass**
die Schlitze tiefer als 35 cm und schmäler als 8 mm eingearbeitet werden und während des Einarbeitens eine transversale Fehlausrichtung des Verarbeitungswerkzeugs (1) durch ein Einführungselement (10, 110) eingeschränkt wird, das in der Lage ist, Reaktionskräfte gegen beide Seiten des Verarbeitungswerkzeugs (1) aufzubringen, wobei das Führungselement (10, 110) nahe an dem Sektor angeordnet ist, wo das Verarbeitungswerkzeug (1) in den Kohlenstoffkörper eintritt und dass das Verarbeiten dem Gleichlauffräsprinzip entsprechend ausgeführt wird.

2. Verfahren nach Anspruch 1,
**dadurch gekennzeichnet, dass**
die Reaktionskräfte mit steigender Fehlausrichtung des Verarbeitungswerkzeugs (1) steigen.

3. Verfahren nach Anspruch 1,
**dadurch gekennzeichnet, dass**
das Führungselement (10) Druckluft auf jede Seite des Verarbeitungswerkzeugs (1) durch durchlöcherte Scheiben oder Düsen bläst.

4. Verfahren nach Anspruch 1,
**dadurch gekennzeichnet, dass**
das Führungselement (110) das Verarbeitungswerkzeug (1) durch Walzen (120, 120'), die auf jeder Seite des Verarbeitungswerkzeugs (1) angeordnet sind, ausrichtet.

5. Verfahren nach Anspruch 1,
**dadurch gekennzeichnet, dass**
die Schneidekanten (12, 114) mit einer Geschwindigkeit von über 100 m/min und weniger als 300 m/min mit Bezug auf den Kohlenstoffkörper bewegt werden.

6. Anordnung zum Verarbeiten von calcinierten Kohlenstoffkörpern für Anoden oder Kathoden zur Verwendung in Verbindung mit der elektrolytischen Herstellung von Aluminium, wobei die Kohlenstoffkörper durch ein rotierendes Verarbeitungswerkzeug (1), das auf einer angetriebenen Spindel montiert ist, verarbeitet werden, wobei das Verarbeitungswerkzeug aus einer hauptsächlich runden Scheibe mit Schneidekanten (12, 12'), die an ihrer Peripherie montiert sind, besteht, wobei die Schneidekanten aus eine Material mit Dauerhaftigkeit und Eignung zum Verarbeiten von calciniertem Kohlenstoffmaterial hergestellt und ferner zum Einarbeiten von Schlitz(en) in die Kohlenstoffkörper angeordnet sind,
**dadurch gekennzeichnet, dass**
das Verarbeitungswerkzeug einen Durchmesser und eine breite aufweist, die das Einarbeiten von Schlitz(en) tiefer als 35 cm und schmäler als 8 mm in die calcinierten Körper gestatten;
die Anordnung ferner ein Führungselement (10, 110) umfasst, das jede Seite des Verarbeitungswerkzeugs (1) gegen transversale Fehlausrichtung führt, wobei das Führungselement (10, 110) nahe an dem Sektor angeordnet ist, wo das Verarbeitungswerkzeug (1) in den Kohlenstoffkörper eintritt, wobei das Verarbeiten dem Gleichlauffräsprinzip entsprechend ausgeführt wird.

7. Anordnung nach Anspruch 6,
**dadurch gekennzeichnet, dass**
das Führungselement (10) durchlöcherte Scheiben oder Düsen umfasst, die Druckluft auf jede Seite des Verarbeitungswerkzeugs (1) blasen.

8. Anordnung nach Anspruch 6,
**dadurch gekennzeichnet, dass**
das Führungselement (110) Walzen (120, 120') umfasst.

9. Anordnung nach Anspruch 6,
**dadurch gekennzeichnet, dass**
die Schneidekanten des Verarbeitungswerkzeugs (12, 12') in Schneidekantenhaltevorrichtungen (7, 7') montiert sind.

10. Anordnung nach Anspruch 9,
**dadurch gekennzeichnet, dass**
die Schneidekantenhaltevorrichtungen (7, 7') abwechselnd auf jeder Seite der Scheibe montiert sind.

11. Anordnung nach Anspruch 6,
**dadurch gekennzeichnet, dass**
die Schneidekanten (12, 12') aus polykristallinem Diamant (PCD) hergestellt sind.

12. Anordnung nach Anspruch 6,
**dadurch gekennzeichnet, dass**
die Schneiderfläche der Schneidekanten sich in einem Winkel von ungefähr 5-15° zum Radius des Verarbeitungswerkzeugs befindet.

13. Anordnung nach Anspruch 6,
**dadurch gekennzeichnet, dass**
zwei oder mehr Verarbeitungswerkzeuge axial verschoben auf derselben Welle zur gleichzeitigen Bildung von zwei oder mehr Schlitzen montiert sind.

## Revendications

1. Procédé de traitement de corps de carbone calcinés pour anodes ou cathodes destinés à être utilisés en connexion avec la production électrolytique d'aluminium, dans lequel les corps de carbone sont traités au moyen d'un outil de traitement rotatif (1) monté sur un axe dirigé, l'outil de traitement (1) comprend un disque avec des bords coupants (12) à sa périphérie externe qui sont constitués d'un matériau avec une durabilité et une adaptabilité pour traiter un matériau de carbone calciné, où ledit outil de traitement est utilisé pour fabriquer une(des) fente(s) dans lesdits corps de carbone,
**caractérisé en ce que**
les fentes sont traitées plus profondément que 35 cm et plus étroitement que 8 mm, et, durant le traitement, un mauvais alignement transversal de l'outil de traitement (1) est limité par un élément de guidage (10, 110) qui est capable de soutenir des forces de réaction contre les deux côtés de l'outil de traitement (1), l'élément de guidage (10, 110) étant disposé près du secteur où l'outil de traitement (1) entre dans le corps de carbone et que le traitement est effectué selon la principe du fraisage en concordance.

2. Procédé selon la revendication 1, **caractérisé en ce que** les forces de réaction augmentent avec le mauvais alignement augmenté de l'outil de traitement (1).

3. Procédé selon la revendication 1,
**caractérisé en ce que**
l'élément de guidage (10) souffle de l'air pressurisé sur chaque côté de l'outil de traitement (1) via de disques perforés ou des jets.

4. Procédé selon la revendication 1,
**caractérisé en ce que**
l'élément de guidage (110) aligne l'outil de traitement (1) au moyen de rouleaux (120, 120') disposés de chaque côté de l'outil de traitement (1).

5. Procédé selon la revendication 1,
**caractérisé en ce que**
les bords coupants (12, 114) sont déplacés à une vitesse supérieure à 100 m/minute et de moins de 300 m/minute par rapport au corps de carbone.

6. Disposition pour traiter des corps de carbone calcinés pour anodes ou cathodes destinés à être utilisés en connexion avec la production électrolytique d'aluminium, moyennant quoi les corps de carbone sont traités au moyen d'un outil de traitement rotatif (1) monté sur un axe dirigé, l'outil de traitement est constitué d'un disque principalement circulaire avec des bords coupants (12, 12') montés à sa périphérie, où lesdits bords coupants sont constitués d'un matériau avec une durabilité et une adaptabilité pour traiter un matériau de carbone calciné et en outre disposés pour traiter une(des) fente(s) dans lesdits corps de carbone, **caractérisé en ce que** l'outil de traitement a un diamètre et une largeur qui permet le traitement de fente(s) plus profonde(s) que 35 cm et plus étroite (s) que 8 mm dans les corps de carbone calciné ;
la disposition comprend en outre un élément de guidage (10, 110) qui guide chaque côté de l'outil de traitement (1) contre le mauvais alignement transversal, l'élément de guidage (10, 110) est disposé près du secteur où l'outil de traitement entre dans le corps de carbone, où le traitement est effectué selon la principe du fraisage en concordance.

7. Disposition selon la revendication 6,
**caractérisée en ce que**
l'élément de guidage (10) comprend des disques perforés ou des jets qui soufflent de l'air pressurisé sur chaque côté de l'outil de traitement (1).

8. Disposition selon la revendication 6,
**caractérisée en ce que**
l'élément de guidage (110) comprend des rouleaux (120, 120') .

9. Disposition selon la revendication 6,
**caractérisée en ce que**
les bords coupants de l'outil de traitement (12, 12') sont montés dans des supports de bord coupant (7, 7').

10. Disposition selon la revendication 9,
**caractérisée en ce que**
les supports de bord coupant (7, 7') sont montés en alternance de chaque côté du disque.

11. Disposition selon la revendication 6,
**caractérisée en ce que**
les bords coupants (12, 12') sont constitués de diamant polycristallin (PCD).

12. Disposition selon la revendication 6,
**caractérisée en ce que**
la surface coupante des bords coupants est à un angle de l'ordre de 5 à 15° au rayon de l'outil de traitement.

13. Disposition selon la revendication 6,
**caractérisée en ce que**
deux ou plus de deux outils de traitement sont montés axialement déplacés sur le même arbre pour la création simultanée de deux ou plus de deux fentes.
